Europäisches Patentamt

European Patent Office

Office européen des brevets

(19)

(11) Veröffentlichungsnummer : **0 168 717**
**B1**

(12) **EUROPÄISCHE PATENTSCHRIFT**

(45) Veröffentlichungstag der Patentschrift :
**11.10.89**

(21) Anmeldenummer : 85108232.1

(22) Anmeldetag : 03.07.85

(51) Int. Cl.⁴ : **C 04 B 30/02** // (C04B30/02,
14:38, 14:30, 14:04)

(54) **Verfahren zur Herstellung von Faserformkörpern mit begrenzt elastischem Verhalten.**

(30) Priorität : 16.07.84 DE 3426120

(43) Veröffentlichungstag der Anmeldung :
22.01.86 Patentblatt 86/04

(45) Bekanntmachung des Hinweises auf die Patenterteilung : 11.10.89 Patentblatt 89/41

(84) Benannte Vertragsstaaten :
**AT BE CH DE FR GB IT LI LU NL SE**

(56) Entgegenhaltungen :
EP--A-- 0 029 227
DE--C-- 698 904
US--A-- 4 221 672
CHEMICAL ABSTRACTS, Band 94, Nr. 26, 29. Juni
1981, Seiten 282-283, Zusammenfassung Nr. 213099s,
Columbus, Ohio, US; & JP-A-80 149 179 (DENKI
KAGAKU KOGYO K.K.) 20-11-1980
CHEMICAL ABSTRACTS, Band 89, Nr. 2, 10. Juli 1978,
Seite 288, Zusammenfassung Nr. 10856k, Columbus,
Ohio, US; & JP-A-77 140 518 (IBIGAWA ELECTRIC
INDUSTRY CO. LTD) 24-11-1977
Die Akte enthält technische Angaben, die nach dem
Eingang der Anmeldung eingereicht wurden und die
nicht in dieser Patentschrift enthalten sind.

(73) Patentinhaber : **INTERATOM Gesellschaft mit beschränkter Haftung
Friedrich-Ebert-Strasse
D-5060 Bergisch-Gladbach 1 (DE)**

(72) Erfinder : **Reck, Alfred, Dipl.-Ing. (FH)
Kollenbacher Strasse 3a
D-5067 Biesfeld (DE)**
Erfinder : **Wolter, Herbert
Gladbacher Strasse 46
D-5060 Bergisch-Gladbach 1 (DE)**
Erfinder : **Jung, Jürgen, Dr. Dipl.-Ing.
Barbarastrasse 3
D-5060 Bergisch-Gladbach 1 (DE)**

(74) Vertreter : **Mehl, Ernst, Dipl.-Ing. et al
Postfach 22 13 17
D-8000 München 22 (DE)**

## Beschreibung

Die vorliegende Erfindung betrifft ein Verfahren zur Herstellung von Faserformkörpern gemäß dem Oberbegriff des ersten Anspruchs. Als Wärmedämmaterial für den Einsatz bei hohen Temperaturen (z. B. 1 000 °C) werden bevorzugt keramische Materialien verwendet, die durch das Brennen einer Suspension von geeigneten mineralischen Fasern (z. B. Aluminiumoxid) in einem Bindemittel hergestellt werden. Derartige Materialien weisen eine gute Formstabilität bei niedriger Dichte, niedrige Wärmeleitfähigkeit und gute Temperaturbeständigkeit sowohl im Dauerbetrieb als auch bei Temperaturwechselbelastungen auf. Ein Herstellungsverfahren für derartige Werkstoffe, gegebenenfalls auch in Gestalt komplizierterer Formteile, hat die Anmelderin in der nicht vorveröffentlichten europäischen Patentanmeldung EP-A-0124033 beschrieben. Dabei werden die Fasern (mit einem Mindestanteil von 95 % Aluminiumoxid) bis zum Erzielen einer wässerigen Suspension in Wasser eingemischt und nach Zumischen einer Mono-Aluminium-Phosphat-Lösung sowie von Aluminiumhydroxid und/oder gelösten Aluminiumsalzen in Siebformen abgegossen, wobei der Flüssigkeitsüberschuß abfließen kann ; die so gewonnenen Körper werden anschließend in herkömmlicher Weise getrocknet und gebrannt. Das Verfahren ist geeignet zur Herstellung von Körpern, die eine im Verhältnis zu ihrer geringen Dichte (ca. 0,2 bis 0,8 g/cm³) große Festigkeit aufweisen. Mit Hilfe besonderer dort angegebener Verfahrensschritte können die genannten Körper insbesondere an ihrer Oberfläche weiter verfestigt werden.

Die vorliegende Erfindung hat eine Abwandlung des beschriebenen Verfahrens zur Aufgabe, mit dessen Hilfe Faserformkörper hergestellt werden können, die bei gleich geringem Raumgewicht und gleicher Temperaturbeständigkeit wenigstens in begrenztem Maße ein elastisches Verhalten aufweisen. Derartige Körper erscheinen besonders für den Einsatz in solchen Fällen geeignet, bei denen Vibrationen, Erschütterungen und/oder sehr hohe Temperaturwechsel-Geschwindigkeiten beherrscht werden müssen. Die herkömmliche Phosphat- oder Mullitbindung der Fasern liefert keine nennenswert elastischen Körper, vielmehr zeigen diese das für Keramikkörper allgemein kennzeichnende spröde Verhalten.

Die Lösung dieser Aufgabe erfolgt durch die im kennzeichnenden Teil des ersten Anspruchs angegebenen Mittel. Als frisch gefällt im Sinne der vorliegenden Erfindung sollen solches Aluminiumhydroxid-Gel und solche Kieselsäure verstanden werden, die seit ihrer Herstellung durch die Einwirkung von löslichen Aluminiumsalzen auf Amoniumhydroxid, bzw. bestimmter Siliziumverbindungen auf dasselbe bei Raumtemperatur längstens 48 Stunden gelagert wurden.

In besonderer Ausgestaltung des Verfahrens wird im zweiten Anspruch vorgeschlagen, zur Herstellung des Aluminiumhydroxidgels ein organisches Aluminiumsalz, z. B. Aluminiumisopropylat (Al(OC₃H₇)₃) zu verwenden. Das so gewonnene Gel ist um den Faktor 2 bis 3 dichter als solches, das bei Einsatz anorganischer Aluminiumverbindungen (z. B. von Aluminiumchlorid AlCl₃) erhalten wird. Dies hat den Vorteil, daß der Formkörper beim Trocknen um ein geringeres Maß schwindet und so besser formhaltig ist. Bei Verwendung von z. B. Aluminiumisopropylat ergibt sich der weitere Vorteil, daß das Zersetzungsprodukt Isopropylalkohol flüchtig ist und aus der Suspension entweicht, diese also keinem besonderen Reinigungsverfahren unterzogen werden muß.

In weiterer Ausgestaltung der Erfindung wird im dritten Anspruch vorgeschlagen, daß das Ausfällen der Kieselsäure durch Einmischen von Siliziumtetrachlorid (SiCl₄) oder einer organischen Siliziumverbindung, z. B. Tetramethoxysilan [(CH₃O)₄Si] bewirkt wird. Insbesondere bei Verwendung von Siliziumtetrachlorid erhält man einen sehr fein dispergierten Niederschlag.

Das Mischungsverhältnis der beiden zunächst getrennt voneinander hergestellten Suspensionen miteinander richtet sich nach den gewünschten Charakteristiken des herzustellenden Faserformkörpers, z. B. Dichte, Elastizität und Festigkeit, und kann für das Gewichtsverhältnis Aluminium zu Silizium (berechnet auf die jeweiligen Oxide) im Bereich 2 : 1 bis 20 : 1 schwanken ; die Wahl eines Verhältnisses im oberen Bereich dieser Spanne liefert Körper mit einer erhöhten Elastizität.

Um die Festigkeit der Körper zu erhöhen, kann gemäß der im vierten Anspruch vorgeschlagenen Ausgestaltung der Erfindung durch die Zugabe keramischer Kornfraktionen eine sogenannte « keramische Armierung » hergestellt werden.

Die Dichte des zu gewinnenden Faserformkörpers läßt sich gemäß der im fünften Anspruch vorgeschlagenen Abwandlung des Verfahrens dadurch erhöhen, daß gleichzeitig mit dem Abgießen in die Siebformen ein Vibrationsverdichten der Fasern stattfindet.

Trocknung und anschließendes Brennen des der Form entnommenen Grünlings geschehen in herkömmlicher Weise, wobei darauf zu achten ist, daß solche (vom Fachmann wählbare) Brennparameter gewählt werden, bei denen vorwiegend die für ihre Elastizität bekannten Mineralphase Theta-Aluminiumoxid erzeugt wird.

## Patentansprüche

1. Verfahren zur Herstellung von keramischen Faserformkörpern aus keramischen Fasern, die Aluminiumoxid enthalten, durch :

    a) Einmischen der Fasern in Wasser,

    d) Zumischen einer wässerigen Suspension von frisch gefälltem Aluminiumhydroxid-Gel,

    f) Abgießen in Siebformen,

h) Trocknen und

· i) Brennen,

dadurch gekennzeichnet, daß der Aluminiumhydroxid-Suspension zusätzlich eine wässerige Suspension frisch gefällter Kieselsäure beigemischt wird.

2. Verfahren nach Anspruch 1, dadurch gekennzeichnet, daß

b) das Aluminiumhydroxid-Gel-Präzipitat durch Einmischen eines organischen aluminiumsalzes in eine wässerige Ammoniaklösung hergestellt wird.

3. Verfahren nach Anspruch 1, dadurch gekennzeichnet, daß

c) das Kieselsäurepräzipitat durch Einmischen von Siliziumtetrachlorid oder einer organischen Siliziumverbindung in eine wässerige Ammoniaklösung hergestellt wird.

4. Verfahren nach Anspruch 1, dadurch gekennzeichnet, daß

e) zusätzlich dem Gemisch keramische Kornfraktionen beigemischt werden.

5. Verfahren nach einem oder mehreren der vorhergehenden Ansprüche, dadurch gekennzeichnet, daß

g) gleichzeitig mit dem Gießvorgang ein Vibrationsverdichten stattfindet.


**Claims**

1. Method for producing moulded ceramic fibrous bodies of ceramic fibres containing aluminium oxide, by means of :

a) mixing the fibres in water,

d) admixing an aqueous suspension of freshly precipitated aluminium hydroxide gel,

f) pouring off in filter-moulds,

h) drying and

i) calcining,

characterised in that an aqueous suspension of freshly precipitated silicic acid is additionally mixed with the aluminium hydroxide suspension.

2. Method according to claim 1, characterised in that

b) the aluminium hydroxide gel precipitate is produced by means of mixing an organic aluminium salt into an aqueous ammonia solution.

3. Method according to claim 1, characterised in that

c) the silicic acid precipitate is produced by means of mixing silicon tetrachloride or an organic silicon compound into an aqueous ammonia solution.

4. Method according to claim 1, characterised in that

e) ceramic particulate fractions are additionally mixed with the mixture.

5. Method according to one or more of the preceding claims, characterised in that

g) vibrational compression takes place simultaneously with the pouring process.


**Revendications**

1. Procédé de fabrication d'objets façonnés fibreux en céramique, à partir de fibres en céramique qui contiennent de l'oxyde d'aluminium, par

a) mélange des fibres à de l'eau,

d) addition d'une suspension aqueuse d'un gel d'hydroxyde d'aluminium fraîchement précipité,

f) coulée dans des moules formant tamis,

h) séchage et

i) calcination,

caractérisé en ce qu'il consiste à mélanger en outre à la suspension d'hydroxyde d'aluminium, une suspension aqueuse d'acide silicique fraîchement précipité.

2. Procédé suivant la revendication 1, caractérisé en ce qu'il consiste,

b) à préparer le précipité de gel d'hydroxyde d'aluminium en mélangeant un sel organique d'aluminium à une solution aqueuse d'ammoniaque.

3. Procédé suivant la revendication 1, caractérisé en ce qu'il consiste,

c) à préparer le précipité d'acide silicique en mélangeant du tétrachlorure de silicium ou un composé organique du silicium à une solution aqueuse d'ammoniaque.

4. Procédé suivant la revendication 1, caractérisé en ce qu'il consiste,

e) à ajouter en outre au mélange des fractions de grains en céramique.

5. Procédé suivant l'une ou plusieurs des revendications précédentes, caractérisé en ce que,

g) un compactage par vibrations a lieu en même temps que le processus de coulée.